# EUROPÄISCHE PATENTSCHRIFT

(11) **EP 3 577 428 B1**
(45) Veröffentlichungstag und Bekanntmachung des Hinweises auf die Patenterteilung: **29.12.2021**
(21) Anmeldenummer: 18703680.1
(22) Anmeldetag: 30.01.2018
(51) Int. Cl.: G01G 19/414, G06Q 10/08

(54) **LAGERSYSTEM MIT EINER DEM LAGERPLATZ ZUGEORDNETEN DETEKTIONSANORDNUNG**
STORAGE SYSTEM COMPRISING A DETECTION ARRANGEMENT ASSIGNED TO THE STORAGE AREA
SYSTÈME D'ENTREPOSAGE COMPORTANT UN AGENCEMENT DE DÉTECTION ASSOCIÉ AU LIEU D'ENTREPOSAGE

(30) Priorität: 03.02.2017 AT 500862017
(43) Veröffentlichungstag der Anmeldung: 11.12.2019
(73) Patentinhaber: TEDALOS GMBH, 2362 Biedermannsdorf (AT)
(72) Erfinder: TRITREMMEL, Thomas, 2362 Biedermannsdorf (AT)
(74) Vertreter: Babeluk, Michael
(86) Internationale Anmeldenummer: PCT/AT2018/060027
(87) Internationale Veröffentlichungsnummer: WO 2018/140994

(56) Entgegenhaltungen:
- WO-A1-2016/166698
- US-A1- 2005 171 854
- US-A1- 2006 071 774
- US-A1- 2014 201 041
- US-A1- 2016 048 798

## Beschreibung

Die Erfindung betrifft ein Lagersystem zur Überwachung von logistischen Systemen gemäß dem Oberbegriff von Patentanspruch 1.

Aus der WO 2016/166698 A1 ist ein Lagersystem bekannt, das durch eine Detektionsanordnung am Lagerplatz eine Entnahme, Ablage oder Veränderung eines Lagerguts detektieren kann, und diese Information an einen Rechner zur Erstellung einer Lagerliste weitergeben kann. Weiters ist ein Identifikationsmittel für die Erkennung eines Codes vorgesehen, das die Identität der das Lager verändernden Person erkennt. Ein System dieser Art ist sehr aufwendig im Aufbau und wenig geeignet, um in ein bestehendes Lager im Zuge eines Nachrüstens eingebracht zu werden, da zu jedem Lagerplatz Energieversorgungs- sowie Datenleitungen verlegt werden müssen. Werden die Detektionsanordnungen mit Energiespeichern ausgestattet, so ist dies meist wenig praktikabel, da gängige Identifikationsmittel, wie RFID-Erkennungsmodule, viel Energie verbrauchen und die Speicher dadurch schnell geleert sind.

In der WO 2005/088494 A1 werden Lagersysteme beschrieben, welche gravimetrische Sensorzeilen oder Sensormatrizen besitzen, die Bewegungen der Lagergüter erkennen und entsprechend Signale an eine Recheneinheit über ein Kommunikations-Netzwerk übermitteln. Solche Systeme sind energiesparender, jedoch wird durch eine rein gravimetrische Sensorik keine eindeutige Identifikation des Lagerguts erwirkt. Ein Einbau weiterer Sensoren zur eindeutigen Erkennung bringt allerdings wieder die Problematik weiterer Energieverbraucher mit sich.

Die US 2016/048798 A1 offenbart ein System, wobei Gewichtssensoren eines Lagerplatzes in einem Feld angeordnet sind und über den Abdruck eines darauf abgestellten Produkts dieses erkannt wird. Dabei sind weitere Sensoren in einem portablen Gerät vorgesehen, über welche die Detektionsanordnungen mit einem bestimmten Produkt gepaart werden können. Nachteilig ist jedoch, dass keine eindeutige Identifikation des Produktes möglich ist. Darüber hinaus ist das Betreiben der Recheneinheit, die die Verarbeitung der Messdaten des komplexen Gewichtssensorenfeldes übernimmt, energieaufwendig, wodurch die Lagerplätze über aufwendig verlegte Versorgungsleitungen versorgt werden müssen.

In der DE 10 2013 004 594 A1 wird eine Sensorvorrichtung beschrieben, welche bei einer Gewichtsänderung des Lagergutes einen Erkennungsvorgang einleitet. So wird an einem Lagerplatz durch die Sensorvorrichtung ein Lagergut identifiziert. Dieses System ist zwar sehr energieeffizient, jedoch sehr starr, da jeder Lagerplatz mit einer derartigen Sensorvorrichtung bestückt sein muss, was einerseits baulich aufwendig und andererseits teuer ist. Außerdem muss bei Veränderung oder Erweiterung des Lagersystems eine aufwendige Nachrüstung vorgenommen werden.

Aufgabe der Erfindung ist damit, die beschriebenen Probleme zu überwinden und ein Lagersystem bzw. ein Verfahren zur Überwachung von logistischen Systemen bereitzustellen, das möglichst energiesparend betrieben werden kann und leicht in bestehende Lager eingebaut werden kann, ohne Versorgungs- oder Datenleitungen in großem Umfang installieren zu müssen, und eine möglichst flexible und leicht veränderbare Lageranordnung möglich ist.

Diese Aufgaben werden erfindungsgemäß durch die Merkmale von Patentanspruch 1 gelöst.

Die Messung des Gewichts verbraucht bei entsprechender Ausführungsform des gravimetrischen Sensors bei Gleichbleiben des Gewichtes kaum bis gar keine Energie. Jedoch ist es meist notwendig, weitere Eigenschaften, die Art des Lagerguts bzw. die Identität des Lagerguts zu bestimmen. Dafür ist mindestens ein weiterer Sensor von Nöten. Der Betrieb dieses Sensors ist in der Regel energieaufwendig, gleichzeitig aber auch nur nötig, wenn das Lagergut gerade vom Lagerplatz entfernt, auf den Lagerplatz gelegt oder sonst manipuliert wird. Durch das Auslösen des Erkennungsvorganges bei Gewichtsveränderung wird verhindert, dass der Sensor zur Identifikation in regelmäßigen Abständen Erkennungsvorgänge durchführen muss, um eine Veränderung zu detektieren. Somit wird sehr viel Energie gespart, wodurch auch eine Energieversorgung durch einen lokalen Energiespeicher möglich wird. Dadurch ist keine komplizierte Versorgung mehr notwendig und die Detektionsanordnung kann leicht in bereits bestehende Lager eingebaut werden. Es können natürlich trotzdem in regelmäßigen Abständen weitere Erkennungsvorgänge durchgeführt werden, falls dies erforderlich ist. Jedoch kann die Frequenz dieser Sicherheitsmessungen stark gesenkt werden, beispielsweise auf drei Sicherheitsmessungen pro Tag oder weniger. Die Frequenz der Sicherheitsmessungen kann auch von der Zahl der Lagerbewegungen pro Zeit des Lagers oder nur des spezifischen Lagerplatzes abhängig gemacht werden.

Neben der eindeutigen Identifikation des Lagerguts kann durch den Gewichtssensor, den die Identifikation vornehmenden Sensor oder durch weitere Sensoren, wie zum Beispiel optische Sensoren oder Temperatursensoren, weitere Parameter oder Informationen des Lagergutes abgenommen werden. So kann zum Beispiel bei Entnahme lediglich eines Teils des Lagerguts durch den Gewichtssensor die genaue Menge der Entnahme aufgezeichnet werden, oder die Temperatur des Lagerguts gemessen werden.

Besonders energiesparend ist eine Ausführungsform, bei der der Sensor, der die Identifikation vornimmt, bzw. auch eventuell andere Sensoren, zwischen zwei notwendigen Erkennungsvorgängen in einen Ruhezustand zu bringen. Wird keine Gewichtsveränderung detektiert, so ist in der Regel auch keine Messung notwendig und der Sensor kann in Ruhezustand gebracht oder, besonders vorteilhaft, ganz abgeschaltet werden.

Der Sensor zur Identifikation des Lagerguts kann unterschiedlich ausgeführt sein. Jedoch ist die Verwendung eines Funksensors, eines RFID-Erkennungssensors, eines optischen Sensors, insbesondere Barcode- und QR-Code-Lesegeräte, oder eines Magnetsensors vorteilhaft, da sie einfach und schnell eindeutig Lagergut erkennen können. Prinzipiell kann die Erkennung durch reine Messungen ohne Wechselwirkung mit Identifikationsmalen an dem Lagergut vorgenommen werden, besonders vorteilhaft ist jedoch, wenn das Lagergut oder gegebenenfalls dessen Transporthülle ein Identifikationsmittel wie einen Barcode oder einen RFID-Chip trägt. Durch Lesung dieses Identifikationsmittels durch einen entsprechenden Sensor kann schnell, energiesparend und einfach das Lagergut eindeutig bestimmt werden.

Die Reichweite der Sensoren zur Identifikation sollte in der Regel so eingestellt sein, dass sich ihr Empfangsbereich nur über eine geringe Reichweite erstreckt. Dies spart Energie und stellt sicher, dass nicht irrtümlich ein Lagergut in einem benachbarten Lagerplatz identifiziert wird. Wenn die Identifikation durch Lesung eines Identifikationsmittels vorgenommen wird, ist es sinnvoll das Identifikationsmittel an einen vordefinierten Ort am Lagergut, beispielsweise an einer Ecke, oder gegebenenfalls an mehreren vordefinierten Orten, wie beispielsweise zwei gegenüberliegende Ecken, anzuordnen. Wird der Sensor zur Identifikation des Identifikationsmittels in der Detektionsanordnung bzw. die Detektionsanordnung selbst so angeordnet, dass sich der Sensor bei fertig eingelagertem Lagergut nahe dem Identifikationsmittel befindet, so ist schon eine besonders niedrige Reichweite des Sensors, beispielsweise von wenigen Zentimetern, ausreichend. Insbesondere bei Verwendung einheitlicher Lagerguthüllen, wie beispielsweise einheitlich ausgeführter Container oder Paletten, ist dies vorteilhaft.

Wenn die Detektionsanordnung mit einer Lagerzentrale verbunden ist, so kann diese Lagerzentrale eine Lagerliste erstellen bzw. eine Organisation des Lagers vornehmen. Insbesondere in einem komplexen Lager ist dies zur Führung des Lagers sehr wichtig. Die Lagerzentrale ist meistens in Form eines Lagercomputers ausgeführt, der laufend Daten von den Detektionsanordnungen über Einlagerungen, Auslagerungen sowie sonstige Veränderungen des Lagers empfängt und gegebenenfalls weitere Daten mit ihnen austauscht. Die Verbindung kann über eine Drahtverbindung, wie eine klassische Datenkabelverbindung, erfolgen, sie kann aber auch drahtlos, z.B. über WLAN, erfolgen. Je nach Ausführungsform sind dem entsprechend Kommunikationseinheiten in den Detektionsanordnungen oder den Lagerplätzen vorzusehen. Es kann auch vorteilhaft sein, die Drahtverbindung über den Lagerplatz zu verlegen, und über eine Schnittstelle die Drahtverbindung in der Detektionsanordnung weiterzuführen. Die Verbindung mit der Lagerzentrale kann durchgehend bestehen, sie kann aber auch immer wieder unterbrochen werden, was zusätzlich Energie spart.

Wird die Detektionsanordnung mit einer Licht- und/oder Akustik-Quelle, wie beispielsweise einer ein- oder vielfarbigen LED und/oder eines Lautsprechers, ausgestattet, so können Signale abgegeben werden, die die Bearbeitung des Lagers erleichtern. So kann das System auch auf falsch eingelagerte Lagergüter, gegebenenfalls leere Energiespeicher oder sonstige Zustände hinweisen.

Wenn das Lagersystem so ausgeführt ist, dass die Lagerzentrale ein Lokalisationssignal an eine oder mehrere Detektionsanordnungen schicken kann, wodurch die Licht- und/oder Akustik-Quelle in einen veränderten Zustand gebracht wird, so erleichtert dies die Lagerarbeit zusätzlich. Die Lokalisationssignale können unterschiedliche zusätzliche Informationen enthalten. Zum Beispiel kann bei Suche eines Lagerguts die Lagerzentrale ein Signal an die entsprechende Detektionsanordnung schicken, wieviel Lagergut zu entnehmen ist. Diese lässt daraufhin eine LED in einer bestimmten Farbe leuchten oder blinken. So findet der Suchende leichter den Lagerplatz. Entnimmt er das Lagergut oder einen Teil davon, so wird dies von der Detektionsanordnung registriert, die Information an die Lagerzentrale weitergeleitet und die LED wieder ausgeschalten. Dies kann beliebig weiter ausgeführt werden, beispielsweise indem alle anderen oder alle dem gesuchten Lagergut umliegenden Detektionsanordnungen andere Ordnungssignale erzeugen, um die Unterscheidungskraft zwischen dem gesuchten Lagergut und den anderen weiter zu erhöhen. Umlagerungsvorgänge zur Optimierung des Lagers und verschiedene weitere Vorgänge können außerdem so angezeigt werden. Solche Pick-by-Light-Systeme, Put-by-Light-Systeme und andere dieser Art sind bereits bekannt und in der Praxis oft angewandt, da sie die Lagerarbeit erleichtern und die Fehlerzahl senken. Systeme dieser Art können unterschiedlichst ausgeführt sein, zum Beispiel können Bestätigungsmechanismen wie Knöpfe oder Schalter vorgesehen sein, die der Lagerarbeiter betätigt wenn er den Lagerplatz gefunden hat. Es können auch Identifikationsmechanismen vorgesehen sein, welche den Lagerarbeiter eindeutig identifizieren. Aber gerade durch die automatische Veränderung des Gewichts kann auf die Installation von Betätigungsmechanismen verzichtet werden.

Des Weiteren kann es je nach Ausführungsform vorteilhaft sein, die Licht- und/oder Akustik-Quelle direkt am Lagerplatz anzuordnen und deren Ansteuerung über eine Verbindung zu der Detektionsanordnung, gegebenenfalls mit einer entsprechenden Schnittstelle zwischen Lagerplatz und Detektionsanordnung, auszuführen.

Bei Nachrüsten eines bestehenden Lagers ist es besonders vorteilhaft, wenn Ausführungsformen von Detektionsanordnungen verwendet werden, welche einen Energiespeicher vorsehen, und die Kommunikation mit der Lagerzentrale über eine drahtlose Verbindung erfolgt. Dadurch kann ein Einbau in das bestehende System sehr kostengünstig und schnell durchgeführt werden.

Erfindungsgemäß ist die Detektionsanordnung vom Lagerplatz trennbar. Dadurch kann das Lagersystem noch flexibler gestaltet werden. So kann die Detektionsanordnung von einem Lagerplatz zum anderen ohne größere Umbauarbeiten verschoben werden. Dabei kann die Umlagerung der Detektionsanordnung ohne oder mit ihr derzeit zugeordnetem Lagergut erfolgen.

Durch die Mobilität der Detektionsanordnung kann auch das Lager laufend effizienzoptimiert werden, sprich umgeordnet werden, was in vielen Fertigungsbetrieben mit veränderlichen Aufträgen an der Tagesordnung ist, ohne aufwendige Umprogrammierungen durchführen zu müssen. Gleichzeitig können die Vorteile der beschriebenen Ausführungsformen nicht nur in einem Zentrallager, sondern auch variabel und verteilt im Betrieb, z.B. an verschiedenen Fertigungsstraßen, laufend genutzt werden. Eine Lokalisierung der Detektionsanordnung, respektive der damit im System assoziierten Ware kann, auf einfache Weise ebenfalls durch Licht/Akustik erfüllt werden. Auch könnten einzelne Pufferlagerplätze innerhalb, außerhalb oder nahe des eigentlichen Lagersystems vorgesehen werden, welche nur zur vorübergehenden Lagerung von Lagergut bestimmt sind, falls dies beispielsweise wegen eines Engpasses an Lagerpersonal oder im Zuge einer Umlagerung notwendig ist.

Vorteilhaft ist, wenn der Lagerplatz, der der Detektionsanordnung zugeordnet wird, von eben dieser identifiziert werden kann. Dies kann beispielsweise durch einen weiteren RFID-Chip am Lagerplatz erfolgen. Zur Identifikation des Lagerplatzes kann entweder der gleiche Sensor wie zur Identifikation des Lagerguts oder ein zusätzlicher Sensor verwendet werden. So kann die Detektionsanordnung bei neuer Zuordnung zu einem Lagerplatz sofort seine Position feststellen und gegebenenfalls ein Signal an die Lagerzentrale weiterleiten. Wird der Erkennungsvorgang des Lagerplatzes und anderem dann ausgeführt, wenn ein Erkennungsvorgang des Lagerguts ausgeführt wird, so ist dies besonders vorteilhaft.

Wird ein Datenspeicher in der Detektionsanordnung zugeordnet, so können sämtliche Veränderungen des Lagerguts bzw. des Lagerplatzes festgehalten, protokolliert und gesichert werden. Insbesondere bei Ausführungsformen, die eine zeitlich unterbrochene Verbindung zu der Lagerzentrale vorsehen, ist dies vorteilhaft, da so neue Daten gespeichert werden können, falls zu diesem Zeitpunkt eine Datenübertragung nicht möglich oder erwünscht ist. Sie kann allerdings auch als unveränderlicher, fälschungssicherer Speicher verwendet werden, wenn dies zum Beispiel aus Sicherheitsgründen notwendig ist.

Das Verfahren, bei laufender Gewichtsüberwachung einen Erkennungsvorgang auszulösen, wenn eine Gewichtsänderung stattfindet, ist deswegen so vorteilhaft, da für die Überwachung des Gewichts kaum bis gar keine Energie verbraucht werden muss. Wenn keine Einlagerung oder Entnahme erfolgt, so ist der Verbrauch der Detektionsanordnung auf ein Minimum reduziert. Die genaue Zahl der Erkennungsvorgänge sowie der genaue Zeitpunkt der Erkennungsvorgänge kann je nach Ausführungsart variieren. So kann es vorteilhaft sein, sofort bei Gewichtsveränderung einen Erkennungsvorgang durchzuführen und nach dem Manipulationsvorgang, wenn das Gewicht über eine gewisse Zeit unverändert bleibt, einen weiteren Erkennungsvorgang durchzuführen, um eventuelle Fehlmessungen zu detektieren.

Wenn ein Lagergut gesucht wird, so kann ein wie bereits beschriebenes Protokoll verwendet werden, indem ein Lokalisationslokal von der Lagerzentrale an eine oder mehrere Detektionsanordnungen geleitet werden, welche abhängig von diesem Signal den gesuchten Lagerplatz durch Ordnungssignale über Licht- und/oder Akustik-Quellen markieren. Dabei können bei Veränderung des Lagers die Detektionsanordnungen entsprechende Signale an die Lagerzentrale übermitteln, beispielsweise um die korrekte Umsetzung des Lagervorganges zu verifizieren oder falsche Lagervorgänge zu melden.

In der Folge wird die vorliegende Erfindung anhand der in der Figur dargestellten Ausführungsvariante näher erläutert. Es zeigt:

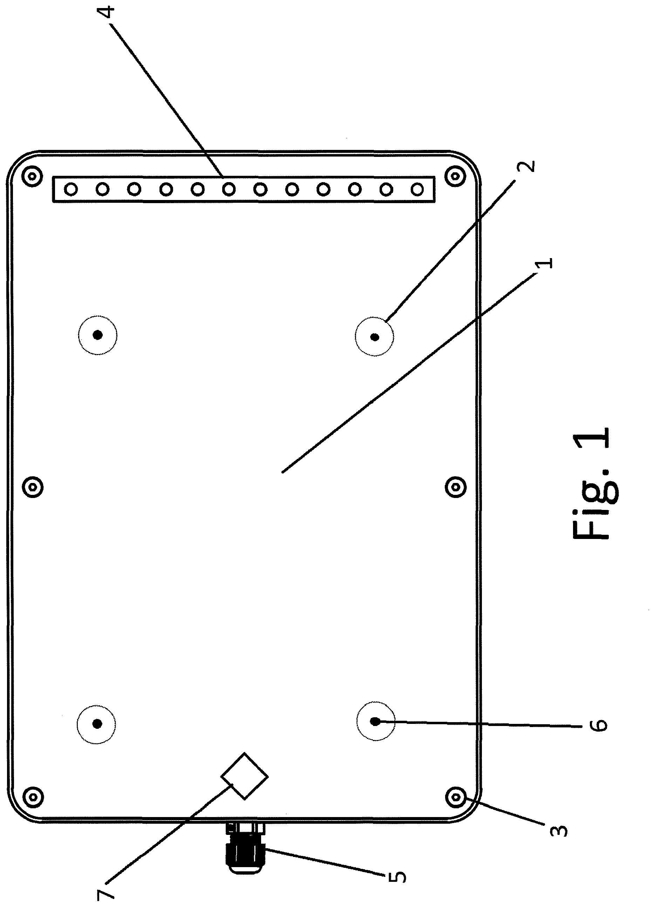

- Fig. 1: eine Draufsicht einer erfindungsgemäßen Ausführungsform einer Detektionsanordnung.

Fig. 1 offenbart eine Darstellung einer erfindungsgemäßen Ausführungsform von oben. Die plattenförmige Detektionsanordnung besitzt eine Oberfläche 1 zum Abstellen des Lagerguts darauf und steht auf vier Füßen 2, denen Gewichtssensoren 6 zugeordnet sind. In der dargestellten Ausführungsform werden vier Gewichtssensoren 6 verwendet, denen eine Wiegeelektronik zugeordnet ist. Die Werte der Gewichtssensoren 6 werden von der Wiegeelektronik addiert bzw. nach Bedarf weiter bearbeitet. Die dargestellte Ausführungsform ist flach ausgeführt, jedoch sei betont, dass dies nur eine von vielen Varianten darstellt. So ist es genauso denkbar, die Detektionsanordnung kistenartig auszuführen, die man mit Lagergut befüllen kann. An einer Seite weist die Detektionsanordnung eine Lichtquelle 4 in Form einer LED-Leiste auf, welche beispielsweise bei Empfangen eines Detektionssignals durch die Detektionsanordnung eingeschalten oder zum Blinken gebracht werden kann. Des Weiteren ist auf der der Lichtquelle 4 gegenüberliegenden Seite ein Anschluss 5 für eine Energieversorgung und/oder Datenleitung angeordnet. Auf der gleichen Seite befindet sich mittig in der Detektionsanordnung ein weiterer Sensor 7 in Form eines RFID-Erkennungssensors. Bei Änderung der gemessenen Werte der Gewichtssensoren 6 wird dies von der Wiegeelektronik registriert, ausgewertet und bei Überschreitung eines Minimalwertes ein entsprechendes Signal an den weiteren Sensor 7, der die Erkennung eines RFID-Senders auf dem Wägegut bzw. auf dessen Verpackung, Hülle oder Palette, durchführt. Dafür sollte das Wägegut idealerweise so auf der Waage abgestellt sein, dass sich der RFID-Sender nahe dem RFID-Erkennungssensors 7 befindet.

## Patentansprüche

1. Lagersystem mit mindestens einem Lagerplatz für ein Lagergut sowie mit mindestens einer dem Lagerplatz zugeordneten Detektionsanordnung zur Identifikation des am Lagerplatz lagernden Lagerguts, die mindestens einen Gewichtssensor (6) und mindestens einen weiteren Sensor (7) zur Identifikation des Lagerguts umfasst, wobei der Gewichtssensor (6) mit dem weiteren Sensor (7) verbunden ist, und der Gewichtssensor (6) dazu ausgebildet ist, bei Änderung des gemessenen Gewichts einen Erkennungsvorgang des weiteren Sensors (7) auszulösen, **dadurch gekennzeichnet, dass** zwischen Detektionsanordnung und Lagerplatz eine betriebsmäßig trennbare Schnittstelle angeordnet ist, so dass die Detektionsanordnung vom Lagerplatz trennbar und damit mobil ist und dass der weitere Sensor (7) einen Ruhezustand aufweist, der zwischen der Ausführung von Erkennungsvorgängen aktiviert werden kann.

2. Lagersystem nach Anspruch 1, **dadurch gekennzeichnet, dass** mindestens ein zusätzlicher Sensor zur Erfassung einer weiteren Zustandsvariablen des Lagerguts vorgesehen ist.

3. Lagersystem nach einem der Ansprüche 1 oder 2, **dadurch gekennzeichnet, dass** der weitere Sensor (7) ein RFID-Sensor, ein Funksensor, ein optischer Sensor, insbesondere ein Barcode- und QR-Code-Lesegerät oder ein Magnetsensor ist.

4. Lagersystem nach einem der Ansprüche 1 bis 3, **dadurch gekennzeichnet, dass** der weitere Sensor (7) eine Identifikation des Lagergutes durch Lesung eines auf dem Lagergut oder gegebenenfalls dessen Transporthülle angebrachten Identifikationsmittels vornimmt.

5. Lagersystem nach einem der Ansprüche 1 bis 4, **dadurch gekennzeichnet, dass** die Detektionsanordnung mit einer Lagerzentrale verbunden ist und Informationen mit ihr austauschen kann.

6. Lagersystem nach einem der Ansprüche 1 bis 5, **dadurch gekennzeichnet, dass** mindestens eine Licht- und/oder Akustik-Quelle (4) an der Detektionsanordnung vorgesehen ist.

7. Lagersystem nach Anspruch 5 und 6, **dadurch gekennzeichnet, dass** die Licht- und/oder Akustik-Quelle (4) durch ein Lokalisationssignal der Lagerzentrale aktivierbar ist.

8. Lagersystem nach einem der Ansprüche 1 bis 7, **dadurch gekennzeichnet, dass** der Lagerplatz von der Detektionsanordnung identifizierbar ist.

9. Lagersystem nach einem der Ansprüche 1 bis 8, **dadurch gekennzeichnet, dass** der Detektionsanordnung ein Datenspeicher zugeordnet ist.

10. Lagersystem nach einem der Ansprüche 1 bis 9, **dadurch gekennzeichnet, dass** der Detektionsanordnung ein Energiespeicher zugeordnet ist.

## Claims

1. Storage system having at least one storage location for a stored item and having at least one detection arrangement assigned to the storage location for identifying the stored item stored at the storage location, which detection arrangement comprises at least one weight sensor (6) and at least one further sensor (7) for identifying the stored item, wherein the weight sensor (6) is connected to the further sensor (7), and the weight sensor (6) is designed to trigger a recognition process of the further sensor (7) when the measured weight changes, **characterised in that** an operatively separable interface is arranged between the detection arrangement and the storage location, so that the detection arrangement can be separated from the storage location and is therefore mobile and that the further sensor (7) has a rest state which can be activated between the performance of recognition processes.

2. Storage system according to claim 1, **characterised in that** at least one additional sensor is provided for detecting a further state variable of the stored item.

3. Storage system according to one of claims 1 to 2, **characterised in that** the further sensor (7) is an RFID sensor, a radio sensor, an optical sensor, in particular a barcode and QR code reader or a magnetic sensor.

4. Storage system according to one of claims 1 to 3, **characterised in that** the further sensor (7) carries out an identification of the stored item by reading an identification means attached to the stored item or, optionally, its transport cover.

5. Storage system according to one of claims 1 to 4, **characterised in that** the detection arrangement is connected to a warehouse center and can exchange information with it.

6. Storage system according to one of claims 1 to 5, **characterised in that** at least one light and/or acoustic source (4) is provided on the detection arrangement.

7. Storage system according to claims 5 and 6, **characterised in that** the light and/or acoustic source (4) can be activated by a localization signal from the warehouse center.

8. Storage system according to one of claims 1 to 7, **characterised in that** the storage location is identifiable by the detection arrangement.

9. Storage system according to one of claims 1 to 8, **characterised in that** a data memory is assigned to the detection arrangement.

10. Storage system according to one of claims 1 to 9, **characterised in that** an energy storage device is assigned to the detection arrangement.

## Revendications

1. Système d'entreposage comportant au moins un emplacement d'entreposage pour un produit ainsi qu'au moins un dispositif de détection associé à l'emplacement d'entreposage pour identifier le produit se trouvant à l'emplacement d'entreposage, et qui comprend au moins un capteur de poids (6) et au moins un autre capteur (7) pour identifier le produit entreposé,
- le capteur de poids (6) étant relié à l'autre capteur (7) et le capteur de poids (6) étant réalisé pour déclencher une opération de reconnaissance de l'autre capteur (7) en cas de variation du poids mesuré,
système **caractérisé en ce que**
une interface séparable en fonctionnement étant prévue entre le dispositif de détection et l'emplacement d'entreposage de façon que le dispositif de détection puisse être séparé de l'emplacement d'entreposage et qu'il soit ainsi mobile et que l'autre capteur (7) a un état de repos qui peut être activé entre l'exécution d'opérations de reconnaissance.

2. Système d'entreposage selon la revendication 1,
**caractérisé en ce qu'**il comprend
au moins un capteur supplémentaire pour saisir une autre variable d'état du produit entreposé.

3. Système d'entreposage selon l'une des revendications 1 ou 2,
**caractérisé en ce que**
l'autre capteur (7) est un capteur RFID, un capteur radio, un capteur optique notamment un appareil de lecture de code-barres et de codes QR ou un capteur magnétique.

4. Système d'entreposage selon l'une des revendications 1 à 3,
**caractérisé en ce que**
l'autre capteur (7) effectue une identification du produit entreposé par la lecture d'un moyen d'identification appliqué sur le produit entreposé ou le cas échéant son enveloppe de transport.

5. Système d'entreposage selon l'une des revendications 1 à 4,
**caractérisé en ce que**
le dispositif de détection est relié à une centrale d'entrepôt et avec laquelle il peut échanger avec des informations.

6. Système d'entreposage selon l'une des revendications 1 à 5,
**caractérisé en ce que**
le dispositif de détection comporte au moins une source lumineuse et/ou une source acoustique (4).

7. Système d'entreposage selon les revendications 5 et 6,
**caractérisé en ce que**
la source lumineuse et/ou acoustique (4) est activée par un signal de localisation de la centrale d'entrepôt.

8. Système d'entreposage selon l'une des revendications 1 à 7,
**caractérisé en ce que**
l'emplacement d'entreposage est identifié par le dispositif de détection.

9. Système d'entreposage selon l'une des revendications 1 à 8,
**caractérisé en ce que**
le dispositif de détection est combiné à une mémoire de données.

10. Système d'entreposage selon l'une des revendications 1 à 9,
**caractérisé en ce que**
le dispositif de détection comporte un accumulateur d'énergie.
